# FASCICULE DE BREVET EUROPEEN

(11) **EP 0 629 586 B1**
(45) Date de publication et mention de la délivrance du brevet: **26.01.2000**
(21) Numéro de dépôt: 94401363.0
(22) Date de dépôt: 17.06.1994
(51) Int. Cl.: C02F 9/00, C02F 1/28, B01D 39/20

(54) **Procédé de dépollution de la nappe phréatique au moyens s'une structure perméable**
Verfahren zur Reinigung von Grundwasser mittels einer durchlässigen Struktur
Process for purifying groundwater by means of a permeable structure

(30) Priorité: 18.06.1993 FR 9307404
(43) Date de publication de la demande: 21.12.1994
(73) Titulaire: COMPAGNIE DU SOL, 92000 Nanterre (FR)
(72) Inventeur: Bouchelaghem, Abdelkrim, F-75019 Paris (FR); Wattement, Hubert, F-77130 Montereau (FR)
(74) Mandataire: Joly, Jean-Jacques

(56) Documents cités:
- EP-A- 0 144 200
- WO-A-93/22241
- GB-A- 1 455 824
- GB-A- 2 255 556
- US-A- 5 057 227

## Description

La présente invention a pour objet un procédé de dépollution des nappes phréatiques, une structure perméable pour la mise en oeuvre de ce procédé ainsi que le procédé de fabrication de ladite structure.

On connaît actuellement plusieurs procédés pour traiter les eaux souterraines polluées.

Selon un premier procédé, on réalise dans le sol autour de la zone contaminée une paroi étanche à l'intérieur de laquelle la pollution est confinée avec l'ensemble des eaux souterraines de la zone ainsi entourée.

Ce procédé présente l'inconvénient que, même avec un débit très faible, l'eau polluée continue à percoler à travers la paroi étanche, ce qui conduit à utiliser pour la réaliser des coulis d'étanchéité qui, en plus de leurs caractéristiques mécaniques, possèdent des propriétés de rétention vis-à-vis des déchets polluants concernés.

Un autre procédé consiste à récupérer les eaux souterraines polluées par pompage dans des puits ou par des tranchées drainantes et à les traiter dans une installation de surface.

Ce procédé présente souvent l'inconvénient de perturber le régime hydraulique du sol en provoquant des désordres, notamment des tassements de terrain, comme cela est le cas lorsque l'on procède à certains rabattements de la nappe phréatique.

De surcroît la récupération des eaux souterraines par pompage peut s'avérer inefficace ou d'un rendement médiocre lorsque ces eaux sont contenues dans des terrains peu perméables ou hétérogènes.

Enfin, ce procédé présente l'inconvénient de nécessiter une station d'épuration en surface dont la maintenance est coûteuse et quelquefois difficile.

Le document GB 2 255 556 décrit une installation de dépollution d'eau souterraine qui nécessite la mise en place d'un circuit d'injection d'un liquide de traitement dans une structure poreuse.

Le document EP 144 200 décrit des granulés enrobés utilisables pour réaliser une colonne de séparation de composés organiques dans un liquide.

La présente invention concerne un nouveau procédé de dépollution des eaux souterraines qui évite les inconvénients précités et qui est d'une mise en oeuvre simple, peu coûteuse et efficace.

La présente invention a pour objet un procédé de dépollution d'eau polluée à l'aide d'un produit absorbant fixé sur des grains en un matériau rigide, caractérisé par le fait que pour dépolluer des eaux souterraines, on place en travers de l'écoulement de la nappe phréatique polluée une structure perméable constituée par des grains calibrés tels que par exemple du gravier, qui sont enrobés dans un coulis dont la composition permet de capter les déchets polluants contenus dans la nappe phréatique.

Le coulis utilisé selon l'invention pour enrober les grains peut être constitué par exemple par un coulis à base d'argile et de Kieselguhr qui permet de retenir des polluants radio-actifs tels que ceux décrits dans le brevet français 81 21025 (FR-A- 2 516 292).

Ce coulis peut être également un coulis à base d'argile, de produit siliceux, de carbonate de sodium, et de pyrophosphate de sodium et/ou de tartrate de potassium qui permet de retenir les polluants constitués par des cations métalliques tels que ceux décrits dans le brevet français 84 11863 (FR-A-2 568 244).

Ce coulis peut être encore un coulis à base de bentonite et de charbon actif qui permet de retenir les polluants organiques tels que ceux décrits dans le brevet français 90 00087 (FR-A-2 656 863).

D'autres coulis aptes à capter des déchets polluants contenus dans les nappes phréatiques peuvent également être utilisés selon l'invention.

Le procédé de fabrication d'une structure perméable dépolluante pour la mise en oeuvre du procédé décrit ci-dessus consiste dans le fait que l'on enrobe les grains avec un coulis possédant des propriétés de rétention vis-à-vis des déchets polluants à traiter et que l'on place dans le sol les grains ainsi enrobés en travers de l'écoulement de la nappe phréatique à dépolluer.

Dans un premier mode de mise en oeuvre du procédé, les grains enrobés de coulis frais sont mis en place dans le sol avant leur durcissement, ce qui permet, après durcissement, d'obtenir une structure rigide, perméable et rétentrice des déchets polluants correspondant à la nature du coulis.

Dans un autre mode de mise en oeuvre, les grains enrobés de coulis sont traités dans un granulateur de telle sorte qu'ils n'adhèrent pas les uns aux autres et qu'ils se présentent sous la forme de granulats enrobés de coulis durci capteurs des déchets polluants. Ces granulats peuvent ensuite être mis en place dans le sol pour constituer une structure perméable qui dépollue la nappe phréatique.

Dans ces deux modes de réalisation, la pellicule de coulis durci recouvre complètement chaque grain en y adhérant fortement sans obstruer la perméabilité de la structure, de sorte que l'eau polluée qui se déplace dans le sol, peut la traverser facilement en y abandonnant ses déchets polluants.

Les grains utilisés selon l'invention sont avantageusement constitués par des sables, graviers ou autres agrégats tels que ceux qui sont communément utilisés pour réaliser des mortiers ou bétons.

De tels grains peuvent avoir par exemple des dimensions de 0,3 à 10 mm de préférence de 1 à 8 mm.

Conformément à l'invention, le rapport entre le volume du coulis en mètres cubes, et le poids des grains en tonnes, est avantageusement compris entre 5 et 25 % et de préférence entre 10 et 20 %.

La quantité de coulis doit être suffisante pour que les grains soient enrobés sur toute leur surface, faut de quoi l'efficacité du procédé s'en trouverait diminuée.

Cependant, le coulis ne doit pas être en quantité trop importante car cela risquerait de conduire à une diminution de la perméabilité de la structure qui pourrait même se trouver obstruée et ne permettrait pas l'écoulement de l'eau contenue dans le sol.

En ce qui concerne la granulométrie des grains utilisés selon l'invention, son abaissement se traduit par une augmentation de la surface d'échange de la structure et pour une quantité donnée de coulis une diminution de l'épaisseur de la pellicule de coulis durci qui enrobe les grains ce qui est favorable à un accroissement de la vitesse de rétention des polluants.

Cependant, une diminution de la taille des grains entraîne aussi une diminution de la perméabilité de la structure, c'est pourquoi il n'est, conformément à l'invention, pas recommandé d'utiliser des grains dont le diamètre est inférieur à 300 microns.

Conformément à l'invention, il est nécessaire que la pellicule de coulis durci adhère solidement aux grains, ce qui conduit à introduire des liants hydrauliques dans la composition du coulis et à utiliser des grains dont la nature permet d'assurer une bonne adhérence du coulis.

Il suffit pour cela de prendre les mêmes précautions que celles qui sont déjà connues pour la formulation des bétons dans lesquels les agrégats doivent être solidement adhérents au liant.

Conformément à l'invention, pour obtenir une bonne formation d'une pellicule continue de coulis autour des grains, il est nécessaire de contrôler la rhéologie du coulis frais de manière à ce que ce dernier présente, au moment de son mélange avec les grains, une rigidité initiale qui soit de préférence comprise entre environ 400 mm2 par gramme et environ 700 mm2 par gramme.

La présente invention a également pour objet un procédé pour réaliser un granulat perméable susceptible de retenir des déchets polluants et utilisable dans le procédé ci-dessus décrit, caractérisé par le fait que l'on mélange des grains à un coulis contenant des substances rétentrices des déchets polluants considérés, de manière à revêtir ces derniers d'une pellicule mince de coulis.

Pour mettre en oeuvre ce procédé, on réalise tout d'abord le coulis qui est ensuite mélangé avec les grains puis soumis à l'action d'un dispositif d'homogénéisation tel qu'une bétonnière.

C'est ainsi que les grains peuvent être livrés sur le chantier en camion toupie dans lequel il suffit d'introduire le coulis et d'homogénéiser le mélange pour le transporter immédiatement sur le lieu de mise en oeuvre et le mettre en place pour constituer la structure selon l'invention.

Il est également possible d'utiliser des dispositifs de type de ceux qui sont utilisés pour la granulation comportant un plateau ou un tube granulateur.

Dans de tels dispositifs, les grains ainsi que le coulis arrivent de manière continue dans les proportions correctes ce qui permet d'obtenir de la sorte un débit constant de grains enrobés qui peuvent ensuite adhérer ou non entre eux.

Les structures perméables selon l'invention, peuvent être avantageusement placées dans une tranchée drainante disposée en travers de l'écoulement de la nappe phréatique que l'on désire dépolluer.

La structure perméable selon l'invention sépare ainsi la nappe phréatique en une partie amont qui est polluée et une partie aval qui est dépolluée sans que l'écoulement de la nappe phréatique soit perturbé.

Ce dispositif ne nécessite aucun entretien et il suffit de prévoir une capacité de rétention suffisante de la structure perméable qui est située dans la tranchée drainante.

Cette solution est particulièrement intéressante lorsqu'il n'est pas possible de pomper l'eau de la nappe phréatique pour la traiter, comme cela est le cas pour des nappes peu perméables ou constituées de plusieurs nappes superposées. On évite ainsi un rabattement qui risquerait de conduire à des désordres de surface tels que des tassements.

Lorsque la nappe phréatique a dépolluer contient en suspension de fines particules qui pourraient à la longue colmater la structure perméable selon l'invention, il est avantageux de placer en amont de cette dernière une masse filtrante de type connu pour éviter le colmatage de la structure selon l'invention.

La structure perméable rétentrice selon l'invention, permet également de réaliser des ouvrages préventifs pour protéger un écosystème fragile vis-à-vis d'une pollution accidentelle.

En effet, la pellicule rétentrice du coulis n'est active qu'en présence des polluants et elle s'adapte d'elle-même aux variations du taux de pollution.

C'est ainsi que l'on peut conformément à l'invention réaliser à titre préventif une tranchée au voisinage d'une installation industrielle située à proximité d'une rivière.

Cette tranchée dont la longueur sera déterminée par la zone d'influence de l'installation industrielle peut être implantée transversalement à l'écoulement des eaux souterraines se dirigeant vers la rivière.

En temps normal, la tranchée restera passive mais elle jouera automatiquement son rôle en cas d'une pollution accidentelle qui viendrait contaminer la nappe phréatique s'écoulant vers la rivière.

Dans le but de mieux faire comprendre l'invention on va en décrire maintenant à titre d'illustration et sans aucun caractère limitatif plusieurs exemples de mises en oeuvre.

### EXEMPLE 1

Pour traiter une nappe phréatique polluée par des composés métalliques toxiques de métaux lourds, on prépare un coulis qui a la composition suivante :
- Eau: 1000 litres
- Liant à base de laitier de haut fourneau: 500 kg
- Sel tampon basique (carbonate de sodiu): 30 kg
- Argile (Montmorillonite dopée): 50 à 100 kg

Après homogénéisation, ce coulis présente une rigidité de 500 à 600 mm2/gramme.

Ce coulis est immédiatement chargé dans un camion toupie contenant des gravillons siliceux dont la granulométrie est comprise entre 4 et 8 mm, le mélange étant effectué à raison de 1000 kg de gravillons pour 125 litres de coulis.

Le camion toupie maintenu en rotation transporte le mélange sur le lieu d'une tranchée qui a été préalablement réalisée par un engin approprié et dans laquelle on déverse le mélange.

Après vieillissement, on obtient une structure perméable rigide et continue ayant les propriétés suivantes :
- Très forte perméabilité: > 10 ⁻¹ m/s
- Capacité de rétention du plomb: > 5 kg/m3
- Capacité de rétention du cadmium: > 5 kg/m3
- Capacité de rétention du mercure: > 5 kg/m3

### EXEMPLE 2

Pour traiter une nappe phréatique polluée par des déchets organiques, on prépare un coulis qui a la composition suivante :
- Eau: 1000 litres
- Liant (CLK45): 500 kg
- Argile (Montmorillonite dopée): 50 à 100 kg
- Silice (Fumée de silice): 50 à 100 kg
- Charbon actif: 50 à 100 kg

Après homogénéisation, ce coulis présente une rigidité de 400 à 500 mm2/gramme.

Il est immédiatement mélangé dans un camion toupie avec des gravillons siliceux dont la granulométrie est comprise entre 2 à 3 mm à raison de 100 litres de coulis pour 1000 kg de gravillons.

Après mise en place dans une tranchée préalablement réalisée et vieillissement, on obtient une structure perméable rigide et continue ayant les propriétés suivantes :
- Perméabilité: > 10⁻²m/s
- Rétention du phénol: > 0,3 kg/m3
- Rétention du benzène: > 1 kg/m3
- Rétention du trichloroéthylène: > 0,6 kg/m3

Dans une variante, on réalise des granulés enrobés à l'aide d'un plateau granulateur muni d'une alimentation en gravillons par bande vibrante et d'une alimentation en coulis.

Les débits d'alimentation du plateau granulateur sont de 100 litres de coulis pour 1000 kg de gravillons.

L'enrobage se fait dans le plateau tournant du granulateur.

Après vieillissement, on obtient des granulés distincts qui les uns des autres sont tous enrobés d'une pellicule de coulis.

Ces granulés ainsi revêtus sont ensuite placés dans une tranchée pour être traversés par le courant de la nappe phréatique.

### EXEMPLE 3

Pour traiter une nappe phréatique polluée par des déchets radio-actifs, on prépare un coulis qui a la composition suivantes :
- Eau: 1000 litres
- Liant (CLK45): 500 kg
- Argile (Vermiculite): 200 kg
- Montmorillonite dopée: 30 à 70 kg

Après homogénéisation, ce coulis présente une rigidité de 500 à 700 mm2/gramme.

On le mélange ensuite en toupie avec des gravillons siliceux ayant une granulométrie de 4 à 8 mm, à raison de 150 litres de coulis pour 1000 kg de gravillons.

Le mélange ainsi obtenu est mis en place dans le sol, conformément à l'invention.

Après vieillissement, on obtient une structure perméable rigide continue ayant les propriétés suivantes :
- Perméabilité: > 10⁻²m/s
- Rétention du Strontium 90: > 5 kg/m3
- Rétention du Césium 137: > 5 kg/m3

## Revendications

1. Procédé de dépollution d'eau polluée, à l'aide d'un produit absorbant fixé sur des grains en un matériau rigide, caractérisé par le fait que pour dépolluer des eaux souterraines, on place en travers de l'écoulement de la nappe phréatique polluée une structure perméable constituée par des grains calibrés tels que par exemple du gravier, qui sont enrobés dans un coulis dont la composition permet de capter les déchets polluants contenus dans la nappe phréatique.

2. Procédé selon la revendication 1, caractérisé par le fait que l'on place dans le sol les grains enrobés de coulis frais avant le durcissement de ce dernier et qu'après durcissement on obtient une structure rigide, perméable et rétentrice des déchets polluants correspondant à la nature du coulis.

3. Procédé selon la revendication 1, caractérisé par le fait que les grains enrobés de coulis sont traités dans un granulateur de telle sorte qu'ils n'adhèrent pas les uns aux autres et qu'ils se présentent sous la forme de granulats indépendants enrobés de coulis durci rétenteurs des déchets polluants.

4. Procédé selon l'une quelconque des revendications précédentes, caractérisé par le fait que le coulis durci recouvre complètement chaque grain en y adhérant fortement.

5. Procédé selon l'une quelconque des revendications précédentes, caractérisé par le fait que l'on utilise des grains constitués par des sables, graviers ou autres agrégats tels que ceux qui sont communément utilisés pour réaliser des mortiers ou bétons.

6. Procédé selon l'une quelconque des revendications précédentes, caractérisé par le fait que les grains ont des dimensions de 0,3 à 10 mm et de préférence de 1 à 8 mm.

7. Procédé selon l'une quelconque des revendications précédentes, caractérisé par le fait que l'on utilise un volume de coulis en mètre cube qui est compris entre 5 et 25 % et de préférence entre 10 et 20 % du poids des grains exprimé en tonnes.

8. Procédé selon l'une quelconque des revendications précédentes, caractérisé par le fait que les grains ont un diamètre supérieur ou égal à environ 300 microns.

9. Procédé selon l'une quelconque des revendications précédentes, caractérisé par le fait que le coulis contient des liants hydrauliques.

10. Procédé selon l'une quelconque des revendications précédentes, caractérisé par le fait qu'au moment de son mélange avec les grains, le coulis frais a une rigidité initiale comprise entre environ 400 mm2 par gramme et environ 700 mm2 par gramme.

11. Procédé selon l'une quelconque des revendications précédentes, caractérisé par le fait que l'on utilise un coulis à base d'argile et de Kieselguhr qui est apte à retenir les polluants radio-actifs.

12. Procédé selon l'une quelconque des revendications 1 à 10, caractérisé par le fait que l'on utilise un coulis à base d'argile, de produits siliceux, de carbonate de sodium et de pyrophosphate de sodium et/ou de tartrate de potassium qui est apte à retenir les polluants constitués par des cations métalliques.

13. Procédé selon l'une quelconque des revendications 1 à 10, caractérisé par le fait que l'on utilise un coulis à base de bentonite et de charbon actif qui est apte à retenir les polluants organiques.

14. Procédé selon l'une quelconque des revendications précédentes, caractérisé par le fait que l'on place en amont de la structure perméable une masse filtrante pour retenir les fines particules charriées par la nappe phréatique qui pourraient colmater ladite structure.

15. Procédé selon l'une quelconque des revendications 1 à 14, caractérisé en ce que les grains revêtus de coulis forment un ensemble rigide en étant relié les uns aux autres.

16. Procédé selon l'une quelconque des revendications 1 à 14, caractérisé en ce que les grains revêtus de coulis sont indépendants les uns des autres.

## Claims

1. Process for decontamination of contaminated water, with the aid of an absorbent product bound on grains made of a rigid material, characterized in that, to decontaminate ground water, a permeable structure is placed across the flow at the contaminated water table, consisting of calibrated grains such as, for example, gravel, which are coated with a grout the composition of which makes it possible to trap the contaminating waste present in the water table.

2. Process according to Claim 1, characterized in that the grains coated with fresh grout are placed in the soil before the hardening of the grout and in that after hardening a structure is obtained which is rigid, permeable and retaining of the contaminating water, corresponding to the nature of the grout.

3. Process according to Claim 1, characterized in that the grout-coated grains are treated in a granulator so that they do not adhere to one another and that they are in the form of independent granulates coated with hardened grout and which retain the contaminating waste.

4. Process according to any one of the preceding claims, characterized in that the hardened grout completely covers each grain, adhering strongly thereto.

5. Process according to any one of the preceding claims, characterized in that grains consisting of sands, gravels or other aggregates are employed, such as those commonly employed for producing mortars or concretes.

6. Process according to any one of the preceding claims, characterized in that the grains are from 0.3 to 10 mm in size and preferably from 1 to 8 mm

7. Process according to any one of the preceding claims characterized in that a volume of grout in cubic metres is employed which is between 5 and 25 % and preferably between 10 and 20 % of the weight of the grains expressed in tons.

8. Process according to any one of the preceding claims, characterized in that the grains have a diameter greater than or equal to approximately 300 microns.

9. Process according to any one of the preceding claims, characterized in that the grout contains hydraulic binders.

10. Process according to any one of the preceding claims, characterized in that at the time of its mixing with the grains, the fresh grout has an initial rigidity of between approximately 400 mm² per gram and approximately 700 mm² per gram.

11. Process according to any one of the preceding claims, characterized in that a grout based on clay and kieselgur is employed, which is capable of retaining radioactive contaminants.

12. Process according to any one of Claims 1 to 10, characterized in that a grout based on clay, siliceous products, sodium carbonate and sodium pyrophosphate and/or potassium tartrate is employed, which is capable of retaining the contaminants consisting of metal cations.

13. Process according to any one of Claims 1 to 10, characterized in that a grout based on bentonite and active carbon is employed, which is capable of retaining organic contaminants.

14. Process according to any one of the preceding claims, characterized in that a filtering mass is placed upstream of the permeable structure to retain the fine particles which are carried by the water table and which could block the said structure.

15. Process according to any one of claims 1 to 14, characterized in that the grout-coated grains form a rigid whole by being joined to one another.

16. Process according to any one of claims 1 to 14, characterized in that the grout-coated grains are independent from one another.

## Patentansprüche

1. Verfahren zur Reinigung verunreinigten Wassers mit Hilfe eines absorbierenden Mittels, das an Körnern eines starren Materials fixiert ist, dadurch gekennzeichnet, daß zur Reinigung von Grundwasser eine durchlässige Struktur quer zum Fluß des verunreinigten Grundwassers (phreatischen Wassers) positioniert wird, wobei diese Struktur aus kalibrierten Körnern, wie z.B. Kies oder grober Sand besteht, die in eine Masse eingehüllt sind, deren Zusammensetzung das Rückhalten der in dem Grundwasser enthaltenen verunreinigenden Stoffe erlaubt.

2. Verfahren nach Anspruch 1, dadurch gekennzeichnet, daß im Erdreich die Körner mit einer Umhüllung aus frischer Masse vor Aushärten dieser Masse positioniert werden, und daß man nach dem Aushärten eine Struktur erhält, die starr und durchlässig ist und mit der Beschaffenheit der Masse korrespondierende verunreinigende Stoffe zurückhalten kann.

3. Verfahren nach Anspruch 1, dadurch gekennzeichnet, daß die mit der Masse umhüllten Körner in einem Granulator so aufbereitet werden, daß sie nicht aneinander haften und in Form eines Granulats vorliegen, das aus Einzelkörnern besteht, die mit einer Umhüllung aus gehärteter Masse versehen und geeignet sind, verunreinigende Stoffe zurückzuhalten.

4. Verfahren nach einem der vorhergehenden Ansprüche, dadurch gekennzeichnet, daß die ausgehärtete Masse jedes Korn vollständig umhüllt und an diesem fest haftet.

5. Verfahren nach einem der vorhergehenden Ansprüche, dadurch gekennzeichnet, daß man Körner verwendet, die aus Sanden, Kiesen oder anderen Zuschlagstoffen bestehen, vergleichbar mit denen, die im allgemeinen zur Herstellung von Mörtel oder Beton eingesetzt werden.

6. Verfahren nach einem der vorhergehenden Ansprüche, dadurch gekennzeichnet, daß die Körner Abmessungen von 0,3 bis 10 mm und bevorzugt von 1 bis 8 mm haben.

7. Verfahren nach einem der vorhergehenden Ansprüche, dadurch gekennzeichnet, daß man ein Volumen der Masse, gemessen in Kubikmetern verwendet, das zwischen 5 und 25 %, bevorzugt zwischen 10 und 20 %, des in Tonnen ausgedrückten Gewichts der Körner liegt.

8. Verfahren nach einem der vorhergehenden Ansprüche, dadurch gekennzeichnet, daß die Körner einen Durchmesser von mindestens etwa 300 Mikrometer haben.

9. Verfahren nach einem der vorhergehenden Ansprüche, dadurch gekennzeichnet, daß die Masse hydraulische Bindemittel enthält.

10. Verfahren nach einem der vorhergehenden Ansprüche, dadurch gekennzeichnet, daß die frische Masse im Moment der Vermengung mit den Körnern eine Anfangsfestigkeit zwischen etwa 400 mm² pro Gramm und etwa 700 mm² pro Gramm hat.

11. Verfahren nach einem der vorhergehenden Ansprüche, dadurch gekennzeichnet, daR eine Masse auf der Grundlage von Ton und Kieselgur verwendet wird, die zum Rückhalten der radioaktiven verunreinigenden Stoffe geeignet ist.

12. Verfahren nach einem der Ansprüche 1 bis 10, dadurch gekennzeichnet, daß eine Masse auf der Grundlage von Ton, siliziumoxidhaltigen Produkten, Natriumcarbonat und Natriumpyrophosphat und/oder Kaliumtartrat verwendet wird, die zum Rückhalten von verunreinigenden Stoffen geeignet ist, die aus Metallkationen bestehen.

13. Verfahren nach einem der Ansprüche 1 bis 10, dadurch gekennzeichnet, das eine Masse auf der Grundlage von Bentonit und Aktivkohle verwendet wird, die zum Rückhalten organischer verunreinigender Stoffe geeignet ist.

14. Verfahren nach einem der vorhergehenden Ansprüche, dadurch gekennzeichnet, daß vor der durchlässigen Struktur eine Filtermasse positioniert wird, um die im Grundwasser enthaltenen feinen Partikel zurückzuhalten, die die genannte Struktur verstopfen könnten.

15. Verfahren nach einem der Ansprüche 1 bis 14, dadurch gekennzeichnet, daß die mit Masse umhüllten Körner eine feste Einheit bilden, indem sie untereinander verbunden sind.

16. Verfahren nach einem der Ansprüche 1 bis 14, dadurch gekennzeichnet, daß die mit Masse umhüllten Körner voneinander unabhängig sind.
